# DEMANDE DE BREVET EUROPEEN

(11) **EP 4 089 208 A2**
(43) Date de publication de la demande: **16.11.2022**
(21) Numéro de dépôt: 22171986.7
(22) Date de dépôt: 06.05.2022
(51) Int. Cl.: C25C 3/02, C01B 21/06, C01C 1/02, C25B 1/14

(54) **PROCÉDÉ DE FABRICATION D'AMMONIAC AVEC UN LIQUIDE IONIQUE**

(30) Priorité: 11.05.2021 FR 2104984
(71) Demandeur: COMMISSARIAT À L'ÉNERGIE ATOMIQUE ET AUX ÉNERGIES ALTERNATIVES, 75015 Paris (FR)
(72) Inventeur: DUBRULLE, Louis, 38054 Grenoble cedex 09 (FR); ARTERO, Vincent, 38054 Grenoble cedex 09 (FR); FAUCHEUX, Vincent, 38054 Grenoble cedex 09 (FR); KOEPF, Matthieu, 38054 Grenoble cedex 09 (FR)
(74) Mandataire: Germain Maureau

(57) **Abrégé**

L'invention concerne un procédé de fabrication d'ammoniac qui comprend les étapes suivantes :
a) on dispose d'une cellule électrochimique (20) qui comporte une électrode de travail (7), une contre-électrode (8), une source de courant continu (12) et un électrolyte (17) qui contient un liquide ionique dont le cation est du lithium ;
b) les ions Li⁺ dudit liquide ionique sont réduits par voie électrochimique de manière à former un dépôt de lithium sur l'électrode de travail (7) ;
c) le lithium formé à l'étape b) est nitruré de manière à former du nitrure de lithium ;
d) le nitrure de lithium formé à l'étape c) est hydrolysé de manière à obtenir l'ammoniac.

## Description

La présente invention concerne un procédé de fabrication d'ammoniac avec un liquide ionique.

L'ammoniac est un composé chimique de formule NH₃. Dans les conditions normales de température et de pression (à savoir à 0°C et sous pression atmosphérique), il se présente sous forme gazeuse.

L'ammoniac est l'un des plus importants produits chimiques de synthèse et occupe le 2^{ème} rang après l'acide sulfurique. Sa production annuelle mondiale est d'environ 200 millions de tonnes. Les principaux pays producteurs d'ammoniac sont la Chine, l'Inde, les Etats-Unis et la Russie.

Environ 80% de la production mondiale d'ammoniac est utilisée dans l'industrie des engrais, en vue de la fertilisation des sols. Cependant, l'ammoniac a d'autres applications. En effet, il est aussi utilisé :
- pour la fabrication d'acide nitrique, lui-même employé dans la production de la plupart des explosifs ;
- pour la fabrication de divers polymères, ainsi qu'en tant que solvant et produit intermédiaire pour la synthèse de nombreux produits azotés ;
- en tant que fluide frigorigène ;
- comme carburant pour les moteurs à combustion interne. Il permet de stocker et transporter facilement l'hydrogène.

L'ammoniac est traditionnellement produit à l'échelle industrielle via le procédé Haber-Bosch qui consiste en une réaction exothermique d'hydrogénation de diazote gazeux par du dihydrogène gazeux en présence d'un catalyseur. Plus précisément, le procédé Haber-Bosch comprend les étapes suivantes :
- en amont du réacteur chimique, la purification du dihydrogène et l'élimination des poisons catalytiques ;
- au sein du réacteur chimique, l'introduction du dihydrogène et du diazote, puis la synthèse de l'ammoniac en présence de catalyseur;
- en aval du réacteur chimique, la séparation de l'ammoniac du diazote et du dihydrogène.

La synthèse de l'ammoniac avec le procédé Haber-Bosch est réalisée à une pression de l'ordre de 150-200 bars et à une température pouvant être comprise entre 350°C et 600°C. Au cours de ce procédé, des gaz et des liquides sous haute pression sont constamment mis en circulation. La réaction étant exothermique, la chaleur produite peut être recyclée.

Outre les conditions de hautes température et pression impliquant des conditions de synthèse complexes et nécessitant des mesures de sécurité drastiques, le procédé Haber-Bosch présente également les inconvénients d'une forte consommation énergétique et d'émissions de dioxyde de carbone dues à la production de dihydrogène par vaporeformage du méthane. En effet, aujourd'hui 95% du dihydrogène est produit à partir de combustibles fossiles par reformage. Le vaporeformage est le procédé le plus couramment utilisé au cours duquel du gaz naturel est exposé à de la vapeur d'eau très chaude de manière à libérer le dihydrogène qu'il contient. Cependant, le vaporeformage a l'inconvénient de rejeter du dioxyde de carbone.

Par ailleurs, la publication intitulée « Increasing stability, efficiency, and fundamental understanding of lithium-mediated electrochemical nitrogen reduction » d'Andersen et al., Energy and Environmental Science, n°11, 2020, décrit un procédé de fabrication d'ammoniac via le lithium. Le dépôt de lithium métallique sur une électrode de travail en molybdène est réalisé par électrolyse en autoclave à partir de LiClO₄ dans un mélange d'éthanol et de tétrahydrofurane à température ambiante et sous une pression de 10 bars de diazote. L'application de cycles pulsés de courant permet de maintenir une tension stable à l'électrode de travail, d'avoir une dissolution partielle du lithium déposé en surface afin d'éviter les réactions secondaires et d'utiliser l'excédent d'électrons pour produire sélectivement de l'ammoniac. Les inconvénients liés à ce procédé sont d'une part la mise sous pression de diazote à 10 bars présentant un risque d'explosion, l'utilisation de tétrahydrofurane, c'est-à-dire un composé organique volatil, cancérogène, mutagène, reprotoxique, instable et potentiellement explosif en présence de sels inorganiques LiClO₄, et d'autre part l'usage de molybdène relativement coûteux et d'éthanol comme source de protons sacrificielle.

Ainsi, les procédés de fabrication d'ammoniac connus à ce jour présentent les inconvénients d'être mis en œuvre dans des conditions de température et pression élevées qui comportent des risques (notamment d'explosion), d'être complexes avec un certain nombre d'étapes et d'utiliser des composés toxiques et potentiellement explosifs. En outre, ces procédés peuvent être relativement coûteux, consommateurs d'énergie et source d'émissions de dioxyde de carbone.

C'est pourquoi, les inventeurs de la présente invention ont développé un procédé de fabrication d'ammoniac qui pallie tous les inconvénients détaillés ci-dessus des procédés de l'état de l'art via l'utilisation de liquides ioniques contenant du lithium.

Dans le cadre de la présente invention, on entend par « liquides ioniques », des sels présentant une température de fusion inférieure à 100°C et qui sont, pour la plupart, liquides à une température proche de la température ambiante (environ 25°C). Ces sels sont constitués de cations associés avec des anions.

La présente invention a pour premier objet un procédé de fabrication d'ammoniac qui se caractérise en ce qu'il comprend au moins les étapes suivantes :
a) on dispose d'une cellule électrochimique comportant au moins une électrode de travail, une contre-électrode, une source de courant continu et un électrolyte qui contient au moins un liquide ionique dont le cation est du lithium ;
b) les ions Li⁺ dudit liquide ionique sont réduits par voie électrochimique de manière à former un dépôt de lithium sur l'électrode de travail de la cellule électrochimique ;
c) le lithium formé à l'étape b) est nitruré par exposition à un flux de diazote de manière à former du nitrure de lithium (autrement dit « Li₃N ») au sein de la cellule électrochimique;
d) le nitrure de lithium formé à l'étape c) est hydrolysé de manière à obtenir l'ammoniac.

Le liquide ionique peut être choisi parmi les liquides ioniques de formule chimique (1) suivante :
[Chem 1]

[Li(Gₓ)_{y}]⁺z⁻ (1)

dans laquelle :
   - x est égal à 1, 2, 3 ou 4,
   - y est égal à 1, 2, 3 ou 4, et
   - z est choisi parmi PF₆, BF₄, ClO₄, NO₃, Br, I, le 2-chloro-1,1,2,2-tétrafluoro éthane-1-sulfinamide (aussi connu sous l'abréviation « CTFSA »), le bis(trifluorométhanesulfonyl)amide (aussi connu sous l'abréviation « TFSA » ou l'abréviation N(Tf)₂, Tf étant le groupe trifluorométhanesulfonyle ou autrement dit le triflyle), le bisfluorosulfonylamide (aussi connu sous l'abréviation « FSA), le trifluoroacétate (aussi connu sous l'abréviation « TFA »), le bisperfluoroéthylsulfonyl)imide (aussi connu sous l'abréviation « BETI ») et le trifluorométhanesulfonate (aussi connu sous l'abréviation « OTf »),
   - « G » est l'abréviation de glyme, à savoir un polyéthylène glycol dont la formule chimique (2) est :
      [Chem 2]

      CH₃O-(CH₂CH₂O)ₙ-CH₃ (2)
dans laquelle n est un nombre entier compris entre 1 et 10, de préférence entre 1 et 4.

De manière tout à fait préférée, le liquide ionique est [Li(G₄)]⁺N(Tf)₂⁻ dont la formule chimique (3) est la suivante :

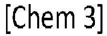

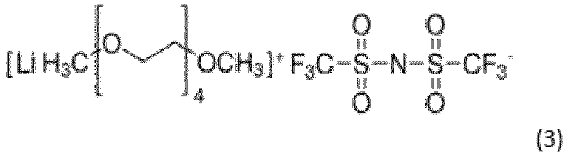

Il s'agit d'un sel liquide à température ambiante qui possède une bonne conductivité ionique (1,60 mS.cm⁻¹ à 30°C) et qui se décompose à une température élevée de 204°C. Ce sel est relativement dense (1,40 g/cm³ à 30°C) et visqueux (81 mPa.s à 30°C).

Ce liquide ionique peut être obtenu à partir de proportions équimolaires de tétraglyme (autrement dit G₄) et de lithium bis(trifluorométhanesulfonyl)amide (autrement dit LiN(Tf)₂) à 60°C par dissolution complète du sel de lithium dans le tétraglyme.

L'électrolyte peut en outre comprendre un solvant polaire protique. Le solvant peut par exemple être choisi parmi l'eau, le méthanol, l'éthanol, la méthylamine, l'éthylamine, l'acide éthanoïque et l'acide propanoïque.

Lorsque l'électrolyte comprend un mélange de liquide ionique et de solvant polaire protique, le pourcentage volumique de liquide ionique par rapport au volume total d'électrolyte (à savoir la somme des volumes du liquide ionique et de solvant polaire protique est avantageusement compris entre 1 % et 30 %, de préférence entre 2 % et 10 %.

L'utilisation d'un électrolyte comprenant un mélange d'un liquide ionique et d'un solvant polaire protique permet d'avoir *in situ* une source de protons pouvant protoner le nitrure de lithium préalablement formé par réaction entre le lithium et le diazote. Un co-solvant peut également être introduit dans l'électrolyte afin d'avoir une bonne solubilisation du solvant polaire protique dans le liquide ionique et de réduire la viscosité facilitant ainsi la cinétique de dépôt du lithium. Le co-solvant peut par exemple être choisi parmi l'acétone et le cyclohexane.

L'électrode de travail peut être une électrode métallique compatible avec l'électrolyte. Il peut par exemple s'agir d'une électrode en carbone, cuivre, fer, nickel, titane, platine, lithium ou un mélange de ces matériaux.

La cellule électrochimique comprend en outre une contre-électrode. Il peut s'agir d'une contre-électrode en l'un des matériaux ou un mélange des matériaux listés ci-dessus pour l'électrode de travail. De manière avantageuse, la contre-électrode est isolée de l'électrode de travail au moyen d'un verre fritté. Cela évite que les produits générés dans le compartiment anodique où se déroule l'oxydation, viennent interférer avec l'électrolyte présent dans le compartiment cathodique où se déroule la réduction du lithium.

Au cours de l'étape b), le potentiel appliqué correspond au potentiel de réduction de Li⁺, à savoir -3,04 V/ESH, « ESH » étant l'abréviation pour « électrode standard à hydrogène ».

L'étape b) est de préférence réalisée sous atmosphère inerte, par exemple en injectant un flux d'argon au sein de la cellule électrochimique.

L'étape b) est avantageusement réalisée en soumettant la cellule électrochimique à une agitation, de préférence constante. La vitesse d'agitation peut être comprise entre 200 tours/minute et 1000 tours/minute, de préférence entre 400 tours/minute et 600 tours/minute.

L'étape b) est avantageusement réalisée en soumettant la cellule électrochimique à un chauffage à une température comprise entre la température de fusion du lithium (à savoir 180,5°C) et la température de dégradation du liquide ionique. Cela permet de réduire la viscosité de l'électrolyte sans le dégrader, d'atteindre une meilleure conductivité ionique et de rendre le lithium ainsi formé à l'étape b) plus réactif pour l'étape c) de nitruration. La température de chauffage peut être comprise entre 182°C et 200°C, de préférence elle est de l'ordre de 185°C.

La durée de l'étape b) peut être comprise entre 1 minute et 24 heures, de préférence entre 1 minute et 1 heure.

L'étape c) peut être réalisée en soumettant la cellule électrochimique à un chauffage à une température comprise entre 182 °C et 200 °C, de préférence elle est de l'ordre de 185°C. La température de chauffage de l'étape c) peut être identique à celle de l'étape b).

L'étape c) est avantageusement réalisée en soumettant la cellule électrochimique à une agitation, de préférence constante. La vitesse d'agitation peut être comprise entre 200 tours/minute et 1000 tours/minute, de préférence entre 400 tours/minute et 600 tours/minute. La vitesse d'agitation de l'étape c) peut être identique à celle de l'étape b).

L'étape c) peut être mise en œuvre avec un dispositif de bullage d'un flux de diazote au niveau de l'électrode de travail de la cellule électrochimique. Le débit de diazote peut être compris entre 10 mL/minute et 100 mL/minute, de préférence entre 30 mL/minute et 40 mL/minute. Un dispositif d'alimentation en flux de diazote pouvant, par exemple, consister en une bouteille de diazote, permet d'alimenter la cellule électrochimique en diazote de telle sorte qu'un bullage de diazote se produise au niveau de l'électrode de travail.

De préférence, le flux de diazote ne comprend pas d'impuretés telles que de l'eau et du dioxygène. En effet, le lithium peut s'oxyder en leur présence de manière à former des dérivés tels que LiOH ou Li₂O ; ce qui aurait pour conséquence de diminuer l'efficacité de l'étape c) du fait de la quantité moindre de lithium et donc le rendement de la fabrication d'ammoniac du procédé selon l'invention. C'est pourquoi de manière avantageuse, la cellule électrochimique est équipée d'un piège à eau et dioxygène qui est disposé en aval du dispositif d'alimentation en flux de diazote afin de purifier le diazote qui est injecté au niveau de l'électrode de travail.

En outre, afin de ne pas fausser la mesure de l'ammoniac effectivement produit avec le procédé de fabrication selon l'invention via le lithium (autrement dit le rendement du procédé de fabrication selon l'invention), il peut également être avantageux que la cellule électrochimique soit équipée d'un piège à oxydes d'azote dits « NOₓ » (par exemple NO et NO₂) disposé également en aval du dispositif d'alimentation en flux de diazote afin de purifier le flux de diazote de ces impuretés NOₓ qui peuvent être réduits en ammoniac.

Dans un mode de réalisation de l'invention, la cellule électrochimique est équipée d'un piège à eau, dioxygène et NOx qui est disposé en aval du dispositif d'alimentation en flux de diazote.

La durée de l'étape c) peut être comprise entre 1 minute et 24 heures, de préférence entre 1 minute et 1 heure.

A l'étape c), le dépôt de lithium formé sur l'électrode de travail se transforme en un dépôt de nitrure de lithium.

Dans un mode de réalisation préféré, les étapes b) et c) sont réalisées de manière simultanée. Cela permet de réduire de moitié la durée des étapes b) et c) comparée à la réalisation de manière successive des étapes b) et étape c). En outre, cela présente l'avantage de s'affranchir d'un flux supplémentaire de gaz inerte tel que l'argon pour maintenir une atmosphère inerte au sein de la cellule électrochimique au cours de l'étape b) comme cela a été décrit ci-dessus. En effet, dans ce mode de réalisation de l'invention, le diazote maintient l'atmosphère inerte au sein de la cellule électrochimique pendant la réalisation simultanée des étapes b) et c).

A l'étape d), le nitrure de lithium formé sur l'électrode de travail est hydrolysé de telle sorte qu'il se dégage de l'ammoniac. L'eau est ajoutée, à l'aide d'un dispositif d'injection approprié et parfaitement à la portée de l'homme du métier, à l'électrolyte contenant au moins le liquide ionique qui a été partiellement dégradé à l'étape b). Ce mélange d'eau et d'électrolyte constitue un milieu réactionnel.

De préférence, l'étape d) d'hydrolyse est réalisée à température ambiante (à savoir à une température d'environ 20°C) et sous agitation à une vitesse d'agitation comprise entre 1200 tours/minute et 1500 tours/minute, de préférence entre 1300 tours/minute et 1400 tours/minute.

A l'étape d), il se forme en outre comme sous-produit de l'hydroxyde de lithium (autrement dit LiOH) qui est soluble dans l'eau. C'est pourquoi, à l'issue de l'étape d), le milieu réactionnel comprend deux phases distinctes qui peuvent être séparées par décantation pour récupérer :
- d'une part le liquide ionique partiellement dégradé, et
- d'autre part une solution aqueuse contenant l'hydroxyde de lithium et l'excès d'eau de l'étape d).

L'excès d'eau peut être évaporé à l'étuve à 100°C afin de valoriser l'hydroxyde de lithium. Par exemple, l'hydroxyde de lithium ainsi récupéré peut être utilisé en savonnerie ou dans la fabrication de batterie au lithium.

De manière tout à fait avantageuse, toutes les étapes du procédé de fabrication d'ammoniac selon l'invention sont réalisées au sein d'un unique réacteur chimique. Pour la réalisation des étapes a) à c), le réacteur chimique comprend au moins une cellule électrochimique et un dispositif d'alimentation en flux de diazote. Ensuite, pour la réalisation de l'étape d), certains des éléments de la cellule électrochimique peuvent être retirés du réacteur chimique à l'exception de l'électrode de travail sur laquelle a été déposé le nitrure de lithium à hydrolyser et un dispositif d'injection d'eau peut être mis en place dans le réacteur chimique.

Cependant, dans le cadre de la présente invention, il peut aussi être tout à fait envisageable que les étapes a) à c) soient réalisées dans un 1^{er} réacteur chimique, puis que l'étape d) d'hydrolyse du dépôt de nitrure de lithium soit réalisée dans un 2^{ème} réacteur chimique distinct du 1^{er} réacteur chimique.

Le procédé de fabrication d'ammoniac selon l'invention présente ainsi les avantages suivants par rapport aux procédé de l'état de l'art :
- il est simple à mettre en œuvre car il comprend un nombre réduit d'étapes dont certaines d'entre elles peuvent être réalisées de manière simultanée (à savoir l'étape b) de réduction des ions Li⁺ et l'étape c) de nitruration du lithium) ;
- toutes ses étapes peuvent être réalisées au sein d'un unique réacteur chimique ;
- il nécessite une faible consommation d'énergie ;
- il n'est pas à l'origine d'émissions de gaz à effet de serre comme cela est le cas pour le procédé Haber-Bosch et rappelé ci-dessus ;
- il ne nécessite pas des conditions de hautes pression et température (en particulier par comparaison avec les conditions du procédé Haber-Bosch) ; ce qui le rend plus sécuritaire ;
- il ne nécessite pas de composés cancérogène, mutagène et reprotoxique ; ce qui le rend respectueux de l'environnement et également plus sécuritaire.

En outre, l'originalité du procédé de fabrication d'ammoniac selon l'invention réside dans l'utilisation d'un liquide ionique qui sert d'électrolyte à l'étape b) et de solvant de synthèse aux étapes c) et d).

Il s'agit d'une nouvelle application des liquides ioniques. C'est pourquoi, la présente invention a aussi objet l'utilisation d'un liquide ionique dont le cation est du lithium pour la fabrication d'ammoniac. Le liquide ionique peut être choisi parmi les liquides ioniques qui ont été décrits ci-dessus.

Par exemple, le liquide ionique peut être choisi parmi les liquides ioniques de formule chimique (1) suivante :
[Chem 1]

[Li(Gₓ)_{y}]⁺z⁻ (1)

dans laquelle :
   - x est égal à 1, 2, 3 ou 4,
   - y est égal à 1, 2, 3 ou 4, et
   - z est choisi parmi PF₆, BF₄, ClO₄, NO₃, Br, I, le 2-chloro-1,1,2,2-tétrafluoro éthane-1-sulfinamide, le bis(trifluorométhanesulfonyl)amide, le bisfluorosulfonylamide, le trifluoroacétate, le bisperfluoroéthylsulfonyl)imide et le trifluorométhanesulfonate,
   - « G » est l'abréviation de glyme, à savoir un polyéthylène glycol dont la formule chimique (2) est :
      [Chem 2]

      CH₃O-(CH₂CH₂O)ₙ-CH₃ (2)
dans laquelle n est un nombre entier compris entre 1 et 10, de préférence entre 1 et 4.

L'invention sera mieux comprise à l'aide de la description détaillée qui est exposée ci-dessous en référence au dessin annexé représentant, à titre d'exemple non limitatif, une mise en œuvre du procédé de fabrication d'ammoniac selon l'invention dans un réacteur chimique expérimental.

[Fig. 1] La figure 1 représente un schéma d'un réacteur chimique expérimental utilisé pour la mise en œuvre des étapes b) et c) du procédé de fabrication d'ammoniac selon l'invention.

[Fig. 2] La figure 2 représente un schéma du réacteur chimique de la figure 1 qui a été modifié pour la mise en œuvre de l'étape d) du procédé de fabrication d'ammoniac selon l'invention.

### PARTIE EXPERIMENTALE :

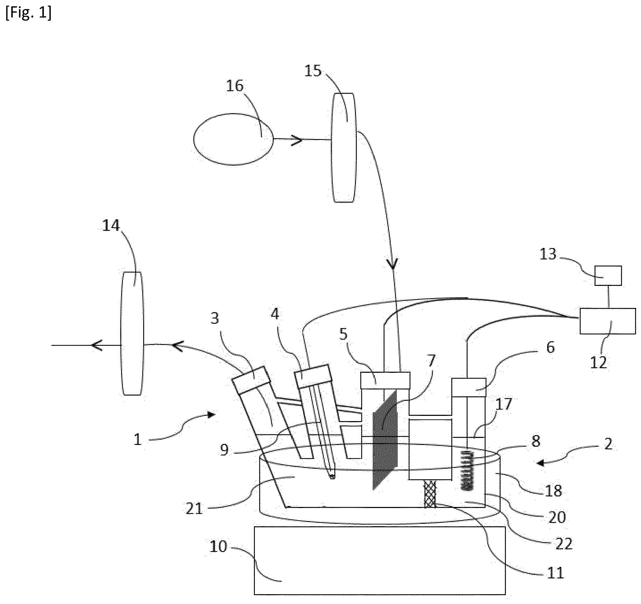

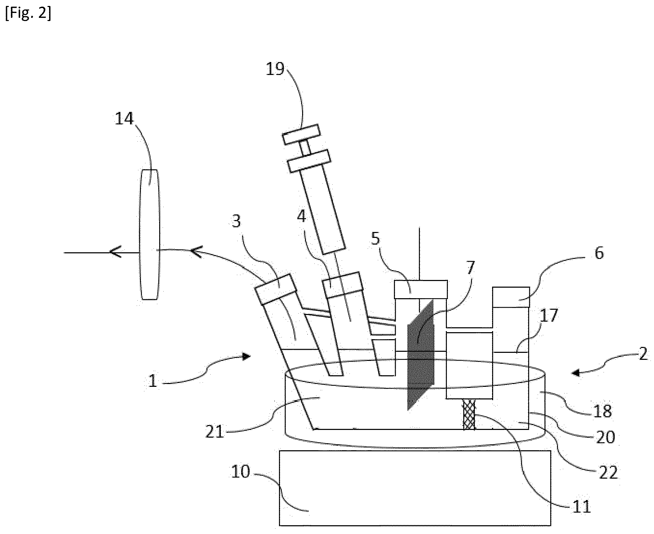

Le procédé de fabrication d'ammoniac selon l'invention a été mis en œuvre avec un réacteur chimique expérimental 1 représenté schématiquement sur les figures 1 et 2.

Comme cela est représenté sur la figure 1, le réacteur chimique 1 comprenait une cellule électrochimique 2 qui comportait un ballon à fond plat quadricol 20 en verre borosilicaté. Le 1^{er} col 3 était relié à un bulleur 14 rempli d'une solution aqueuse d'acide sulfurique à une concentration de 0,1 mol/L configuré pour piéger l'ammoniac produit au cours du procédé de fabrication d'ammoniac selon l'invention. Une électrode de référence 9 à base d'argent Ag/AgN(Tf)₂/[Li(G₄)]N(Tf)₂ était insérée dans le 2^{ème} col 4. Une électrode de travail 7 en cuivre était insérée dans le 3^{ème} col 5. Une contre-électrode 8 en platine était insérée dans le 4^{ème} col 6. De plus, le ballon à fond plat quadricol 20 comportait un verre fritté 11 définissant ainsi un compartiment cathodique 21 comprenant l'électrode de travail 7 et l'électrode de référence 9 et un compartiment anodique 22 comprenant la contre-électrode 8. L'électrode de référence 9, l'électrode de travail 7 et la contre-électrode 8 étaient reliées à un potentiostat 12 commercialisé par la société BioLogic sous la dénomination commerciale VMP-300. Le potentiostat 12 était couplé à un amplificateur 13 commercialisé par la société BioLogic sous la dénomination commerciale VMP-300 B. Le ballon à fond plat quadricol 20 était disposé dans un cristallisoir 18 en verre rempli d'huile permettant de chauffer la cellule électrochimique 2.

La cellule électrochimique 2 était reliée à un dispositif d'alimentation en flux de diazote 16 de la cellule électrochimique 2 qui consistait en une bouteille de diazote. Ce dispositif d'alimentation 16 était connecté à un bulleur à huile 15 lui-même connecté au 3^{ème} col 5 dans lequel se trouvait l'électrode de travail 7. Ce bulleur à huile permettait de contrôler le débit du flux de diazote fourni par le dispositif d'alimentation 16.

La cellule électrochimique 2 comprenait un électrolyte 17 constitué du liquide ionique [Li(G₄)]⁺N(Tf)₂⁻. Plus précisément, 36 mL de ce liquide ionique ont été versés dans le compartiment cathodique 21 et 6 mL de ce liquide ionique ont été versés dans le compartiment anodique 22 de manière à immerger les électrodes 7, 8 et 9.

Un agitateur à plaque chauffante magnétique 10 commercialisé par la société Fisher Scientific sous la dénomination commerciale IKA^{™} permettait de chauffer et d'agiter l'électrolyte 17.

Les étapes b) et c) du procédé de fabrication d'ammoniac selon l'invention ont été mises en œuvre de manière simultanée en :
- instaurant un flux de diazote à un débit de 25 mL/minute ;
- instaurant un potentiel de -3.04 V/ESH ;
- chauffant l'électrolyte 17 à une température de 185°C et en le soumettant à une agitation de 400 tours/minute.

Ces conditions des étapes b) et c) ont été maintenues pendant une durée de 4 heures.

Les ions Li⁺ du liquide ionique ont ainsi été réduits et le lithium formé a été nitruré pour obtenir du nitrure de lithium au niveau de la partie immergée de l'électrode de travail 7 dans l'électrolyte 17.

Ensuite, le réacteur chimique 1 a été modifié comme cela est représenté schématiquement sur la figure 2. Plus précisément, les électrodes 8 et 9 de la cellule électrochimique 2, le potentiostat 12 et l'amplificateur 13, ont été retirés, ainsi que le dispositif d'alimentation en flux de diazote 16 et le bulleur à huile 15. Un dispositif d'injection d'eau 19 a été inséré dans le 2^{ème} col 4 du ballon à fond plat quadricol 20.

L'étape d) du procédé de fabrication d'ammoniac selon l'invention a été réalisée à température ambiante (20°C) en soumettant l'électrolyte 17 contenant le liquide ionique qui a été partiellement dégradé à une agitation à une vitesse de 1400 tours/minute et en injectant au travers le 2^{ème} col 4 du ballon à fond plat quadricol 20 un volume d'eau de 2 mL d'eau de manière à hydrolyser le nitrure de lithium.

Le bulleur 14 rempli de la solution aqueuse d'acide sulfurique à une concentration de 0,1 mol/L a permis de piéger l'ammoniac gazeux libéré lors de l'hydrolyse. L'ammoniac ainsi piégé a été dosé avec la méthode des ions salicylate, à savoir une méthode colorimétrique basée sur la réaction entre le salicylate de sodium et l'ammoniac de manière à déterminer la quantité totale d'ammoniac produite au cours du procédé selon l'invention. Cette quantité était de l'ordre de 10⁻¹⁰ mol.s⁻¹.cm⁻², à savoir une valeur comparable aux ordres de grandeur de la littérature : 10⁻¹¹ mol.s⁻¹.cm⁻² - 10⁻⁹ mol.s⁻¹.cm⁻² obtenus avec d'autres voies de synthèse de l'ammoniac.

En outre, au cours de l'étape d), il s'est formé comme sous-produit de l'hydroxyde de lithium soluble dans l'eau. C'est pourquoi à l'issue de l'étape d), le milieu réactionnel dans le ballon à fond plat quadricol 20 comprenait deux phases distinctes qui ont été séparées par décantation pour récupérer d'une part le liquide ionique partiellement dégradé et d'autre part la solution aqueuse contenant l'hydroxyde de lithium. L'excès d'eau a été évaporé à l'étuve à 100°C afin de valoriser l'hydroxyde de lithium.

## Revendications

1. Procédé de fabrication d'ammoniac, **caractérisé en ce qu'**il comprend au moins les étapes suivantes :
a) on dispose d'une cellule électrochimique (2) comportant au moins une électrode de travail (7), une contre-électrode (8), une source de courant continu (12) et un électrolyte (17) qui contient au moins un liquide ionique dont le cation est du lithium ;
b) les ions Li⁺ dudit liquide ionique (17) sont réduits par voie électrochimique de manière à former un dépôt de lithium sur l'électrode de travail (7) de la cellule électrochimique (2) ;
c) le lithium formé à l'étape b) est nitruré par exposition à un flux de diazote de manière à former du nitrure de lithium, au sein de la cellule électrochimique ;
d) le nitrure de lithium formé à l'étape c) est hydrolysé de manière à obtenir l'ammoniac.

2. Procédé de fabrication selon la revendication 1, **caractérisé en ce que** le liquide ionique (17) est choisi parmi les liquides ioniques de formule chimique (1) suivante :
[Chem 1]
[Li(Gₓ)_{y}]⁺z⁻ (1)
dans laquelle :
- x est égal à 1, 2, 3 ou 4,
- y est égal à 1, 2, 3 ou 4, et
- z est choisi parmi PF₆, BF₄, ClO₄, NO₃, Br, I, le 2-chloro-1,1,2,2-tétrafluoro éthane-1-sulfinamide, le bis(trifluorométhanesulfonyl)amide, le bisfluorosulfonylamide, le trifluoroacétate, le bisperfluoroéthylsulfonyl)imide et le trifluorométhanesulfonate,
- « G » est l'abréviation de glyme, à savoir un polyéthylène glycol dont la formule chimique (2) est :
[Chem 2]
CH₃O-(CH₂CH₂O)ₙ-CH₃ (2)
dans laquelle n est un nombre entier compris entre 1 et 10, de préférence entre 1 et 4.

3. Procédé de fabrication selon la revendication 2, **caractérisé en ce que** le liquide ionique est [Li(G₄)]⁺N(Tf)₂⁻ dont la formule chimique (3) est la suivante :

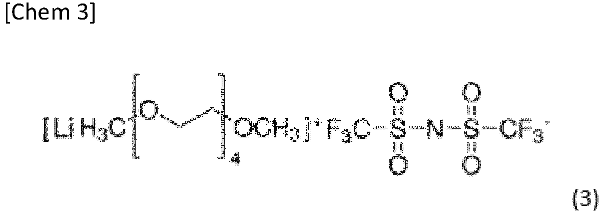

4. Procédé de fabrication selon l'une quelconque des revendications 1 à 3, **caractérisé en ce que** l'électrolyte (17) comprend en outre un solvant polaire protique choisi parmi l'eau, le méthanol, l'éthanol, la méthylamine, l'éthylamine, l'acide éthanoïque et l'acide propanoïque.

5. Procédé de fabrication selon l'une quelconque des revendications 1 à 4, **caractérisé en ce qu'**au cours de l'étape b), le potentiel appliqué est de -3.04 V/ESH (« ESH » étant l'abréviation pour « électrode standard à hydrogène »).

6. Procédé de fabrication selon l'une quelconque des revendications 1 à 5, **caractérisé en ce que** l'étape b) est réalisée en soumettant la cellule électrochimique (2) à une agitation dont la vitesse d'agitation est comprise entre 200 tours/minute et 1000 tours/minute, de préférence entre 400 tours/minute et 600 tours/minute.

7. Procédé de fabrication selon l'une quelconque des revendications 1 à 6, **caractérisé en ce que** l'étape b) est réalisée en soumettant la cellule électrochimique (2) à un chauffage à une température comprise entre 182°C et 200°C.

8. Procédé de fabrication selon l'une quelconque des revendications 1 à 7, **caractérisé en ce que** l'étape c) est mise en œuvre avec un dispositif de bullage d'un flux de diazote au niveau de l'électrode de travail (7) de la cellule électrochimique (2) dont le débit de diazote est compris entre 10 mL/minute et 100 mL/minute, de préférence entre 30 mL/minute et 40 mL/minute.

9. Procédé de fabrication selon l'une quelconque des revendications 1 à 8, **caractérisé en ce que** les étapes b) et c) sont réalisées de manière simultanée.

10. Procédé de fabrication selon l'une quelconque des revendications 1 à 9, **caractérisé en ce que** l'étape d) est réalisée à une température de 20°C et sous agitation à une vitesse d'agitation comprise entre 1200 tours/minute et 1500 tours/minute, de préférence entre 1300 tours/minute et 1400 tours/minute.

11. Utilisation d'un liquide ionique dont le cation est du lithium dans un procédé pour la fabrication d'ammoniac selon l'une quelconque des revendications 1 à 10.
